# EUROPEAN PATENT APPLICATION

(11) **EP 0 749 812 A1**
(43) Date of publication of application: **27.12.1996**
(21) Application number: 96109575.9
(22) Date of filing: 14.06.1996
(51) Int. Cl.: B25J 15/00, B25J 15/10, B25J 15/06, B25J 19/02

(54) **Robotized gripping system for handling ceramic sanitary fittings**

(30) Priority: 20.06.1995 IT MI951317
(71) Applicant: GAIOTTO IMPIANTI S.p.A., I-26010 Vaiano Cremasco (CR) (IT)
(72) Inventor: Gaiotto, Battista, 26010 Monte Cremasco (Cremona) (IT); Gaiotto, Elena Vittoria, 26020 Palazzo Pignano (Cremona) (IT)
(74) Representative: Carloni, Franco

(57) **Abstract**

The robotized gripping system for handling sanitary fittings comprises upper and lower support means (U,V) to be positioned on predetermined areas of the sanitary fitting, gripping means (17,24,25,26,28,29,30) disposed on the free end of at least one of said support means and positioning means (M1,M2,M3,M4, M5,M6,M7) for positioning said support means together with said gripping means (17,24,25,26,28,29,30) in said predetermined areas of the sanitary fitting (3). The positioning means (M1,M2,M3,M4,M5,M6,M7) are under the control of a controller which controls all the movements of said support means (U,V) and gripping means (17,24,25,26,28,29,30) in accordance with the shape and dimension of the sanitary fittings (3) to be gripped.

## Description

The present invention generally relates to a robotized manipolator, more particularly a gripping system for automatically loading and unloading ceramic sanitary fittings, such as wash-basins, bidets and water-closets.

The typical process for producing the above ceramic sanitary fittings in the following referred to as sanitary pieces for the sake of semplicity substantially comprises three separate steps, i.e a first step in which the sanitary piece is formed, a second step in which the sanitary piece is emailed and dried and a third step in which the sanitary piece is baked.

The first forming step consists in pouring the ceramic material into suitable molds in which the ceramic material is settled and solidified in the shape of the sanitary piece to be obtained; the sanitary piece is then stripped from the mold and dried in air or by means of suitable dryers. Once the sanitary piece is dried, it is cleaned, controlled and then transported to the emailing apparatus where the second step occurs, in which, with the exception of the lower flat bearing basis of the sanitary piece, the so-called "foot", the latter is emailed, cleaned and dried again.

Until the end of the second step, the sanitary piece is particularly brittle and delicated to be handled especially if the email is not completely dried and therefore the outer surface of the sanitary piece is particularly liable to receive impressions or prints.

The third step consists in baking the sanitary piece, what occurs by introducing it in particular tunnel furnaces through which the sanitary pieces pass disposed on suitable movable supports and, thank to the elevated temperature existing therein, the sanitary pieces are baked so as to take the final shape and hardness.

Many efforts for automating the forming and emailing steps of the sanitary pieces have been made. The Italian patent application MI94A000535 filed by the same applicant as the present invention discloses an automatic emailing system for sanitary pieces by using a robot interlocked to a sanitary piece holding turntable and an automatic cleaning device of the sanitary piece foot provided with an automatic manipolator for unloading and loading the sanitary piece on the turntable.

The attempts at automating the third step of the process, particularly the loading step of the sanitary pieces on the support means of the baking tunnel furnace, generally formed of refractory plates translating in the furnace, have been unsuccesful for the following principal reasons:
1) each sanitary piece which is supported on the foot has different shapes and dimensions;
2) unlike other robotized systems, it is not possible for the sanitary piece to be lifted from the foot because the foot necessarily must be free in order to be able to dispose it on the moving plates of the furnace;
3) the sanitary pieces are brittle and delicated and in particular it is necessary to avoid the formation of any type of impressions on the emailed surface;
4) the sanitary piece is to be recognized both as shape and as disposition on the supporting carriage;
5) the sanitary piece is to be disposed according to a precise orientation by taking into account the optimal baking procedures of the sanitary piece in the furnace (the orientation of the sanitary piece on the support plate influences the baking process).

Unlike the handling system used for moving the sanitary pieces in the emailing areas or "islands" which are disclosed in detail in the above Italian patent application No. MI94A000535 where the sanitary pieces are loaded and supported by using the flat, not emailed foot of the sanitary piece, the loading operation of the sanitary pieces on the furnace supports occurs by disposing the foot of the sanitary piece on the upper surface of the support, what requires necessarily to grip the sanitary piece in different gripping areas thereof, which are different from a sanitary piece to another and are liable to receive impressions or prints.

The main object of the present invention is to provide a robotized gripping system for handling ceramic sanitary pieces which assures a safe gripping of a plurality of sanitary pieces each having different shapes and dimensions, without using the foot surface thereof.

It is another object of the present invention to provide a gripping system which can recognize the type of sanitary piece to be taken up, its relative position and its orientation with respect to the gripping system.

It is still another object of the present invention to provide a gripping system which, after having identified the sanitary piece and its relative position, can grip the sanitary piece in predetermined areas adapted to cooperate with the gripping means of the system.

It is still another object of the present invention to provide a gripping system which can grip the various sanitary pieces without leaving impressions or prints (when the sanitary pieces are emailed) or indesirable plastic deformations.

More particulary, the robotized gripping system for handling sanitary pieces according to the present invention, cooperating with a controller and an optoelectronic system for recognizing the sanitary pieces as to the shape and dimension, is characterized in that it comprises:
- upper and lower support means to be positioned on predetermined areas of the sanitary piece;
- gripping means disposed on the free end of at least one of said support means; and
- positioning means for positioning said support means together with said gripping means in said predetermined areas of the sanitary piece,
- said positioning means being under the control of a controller which controls all the movements of said support means and gripping means in accordance with the shape and dimension of the sanitary piece to be gripped.

The present invention will be now described in more detail in connection with preferred embodiments thereof given by way of example only and therefore not intended in a limiting sense and illustrated in the accompanying drawings, wherein:
Fig. 1 is a side view of the gripping system according to the invention during the transport of a wash-basin;
Fig. 2 is a side view of the gripping system of Fig. 1 during the transport of a bidet, according to a first gripping arrangement;
Fig. 3 is a side view of the gripping system of Fig. 1 during the transport of a bidet according to a second gripping arrangement;
Fig. 4 is a side view of a modification of the gripping system of Fig. 1;
Fig. 5 is a cross section of the gripping system of Fig. 4, taken along the line V-V of Fig. 4;
Fig. 6 is a side view of another modification of the gripping system of Fig. 1;
Fig. 7 is a front view of the gripping system of Fig. 4;
Figs. 8,9 and 10 show diagrammatically and in three orthogonal positions the gripping system of Fig. 6 applied to a water-closet, a wash-basin and a bidet, respectively;
Fig. 11 is a side view of the gripping system of Fig. 1 applied to an overhanged robot moving along three mutually perpendicular directions for loading sanitary pieces of different types.

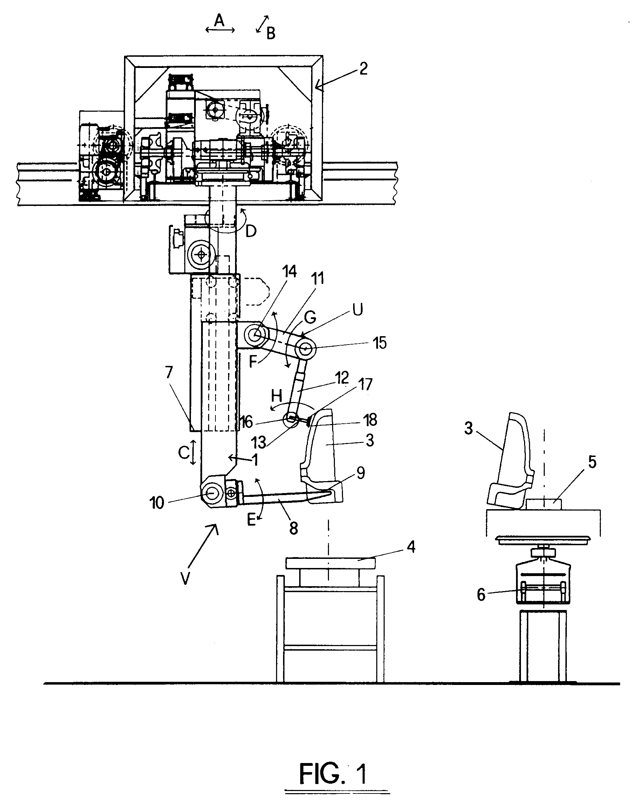

In Fig. 1 the gripping system, generally designated by 1, is mounted on an overhanged robot, generally designated by 2, moving along three mutually perpendicular directions (cartesian axes) and after having gripped the sanitary piece 3, in this case a wash-basin. This sanitary piece is taken up from a stool 4 and disposed on a plate 5 of a kinematic chain 6 of the baking furnace. As can be seen from Fig. 1, the robot 2 can move along the cartesian axes A,B and C (which are mutually perpendicular) and rotate in the direction D as indicated by the arrows. The gripping system according to the invention is disposed at the lower end 7 of the robot 2.

This gripping system 1 comprises substantially a pair of lower support elements V and one upper support element U. Each lower support element V is formed of an arm 8 which is engaged in a cavity of the sanitary piece 3 with its free end 9. The other end of the arms 8 is disposed on an axis 10 about which it can rotate according to the direction E f.i. under the control of a motor (not shown). The upper support element U is formed of a multiarticulated elephant's trunck having three links 11,12 and 13, which can rotate about the rotation axes 14,15 and 16, respectively according to the directions F,G and H, respectively, again f.i. under the control of a motor (not shown). At the free end of the link 13, a suction cup 17 is applied, which is connected to a vacuum source (not shown) and intended to be temporarily attached to the outer surface 18 of the sanitary piece 3 so as to form a temporary counter-rotation bond for assuring the stability of the sanitary piece disposed on the ends 9 of the arms 8 during the movement of the sanitary piece. All the movements of the gripping system are under control of a controller (not shown) as is usual in robot system controls.

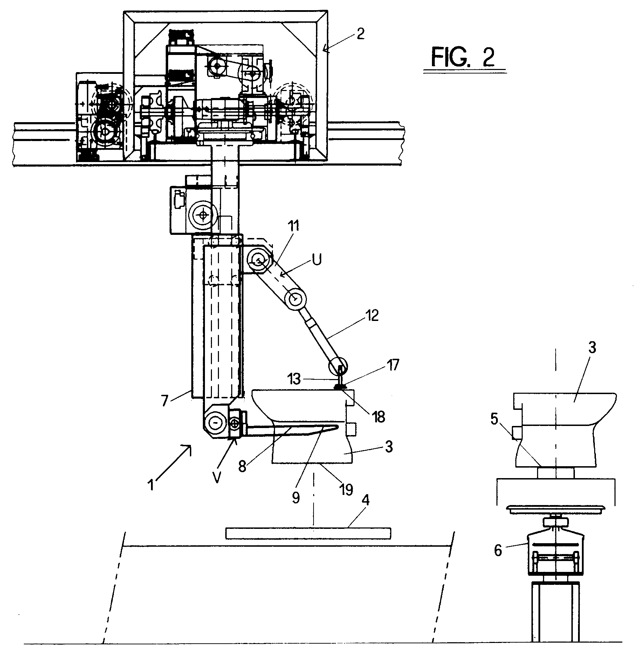

In Fig. 2 there is shown the same gripping system as in Fig. 1 in which the sanitary piece 3 is a bidet. The support of the bidet is obtained by means of the lower elements V whereas the balance and the stability of the sanitary piece during the transport is assured by the upper support element U through the suction cup 17 which now is applied in a different area 18 of the bidet 3. It is to be noted that the bidet 3 is taken up without using the foot 19 of the sanitary piece because the latter is left free for disposing the sanitary piece on the plate 5 of the baking furnace.

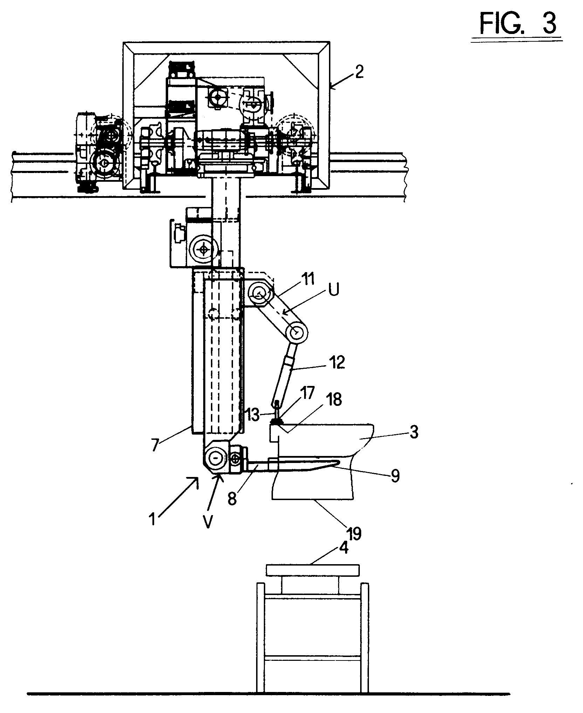

Fig. 3 shows the gripping system 1 during the transport step of a bidet having a shape different from that of Fig. 2 and in which the bidet is gripped in a position rotated by 180° with respect to that of Fig. 2 with particular reference to the position of the upper support element U.

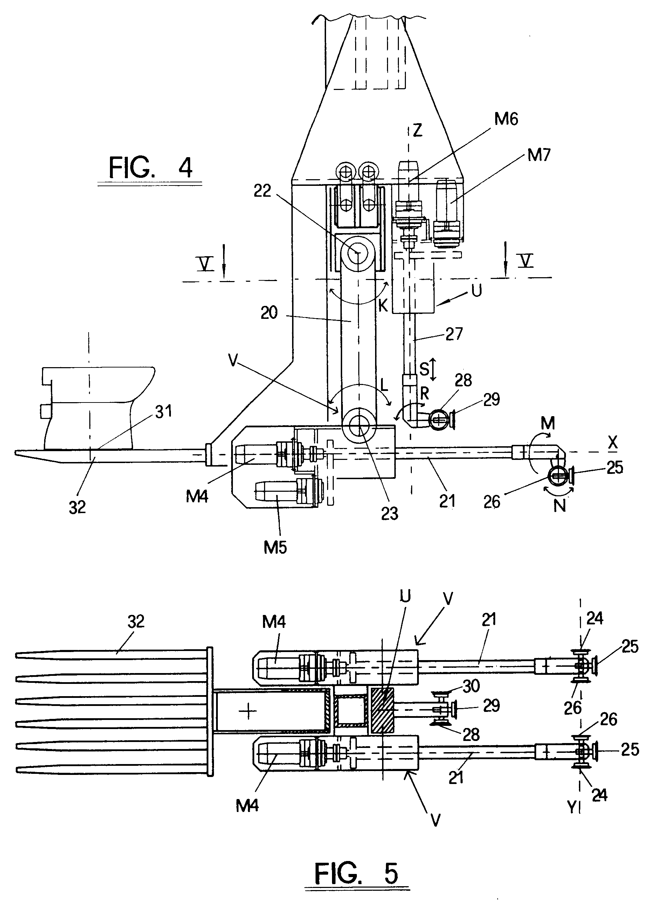

Figs 4,5 and 7 show in a side, a top plan and a front view, respecitvely a modification of the gripping system 1 of Fig. 1 in which the lower support elements V are formed of a pair of articulated arms 20,21 and at the end of the arms 21 one or more suction cups for gripping the sanitary piece are applied.

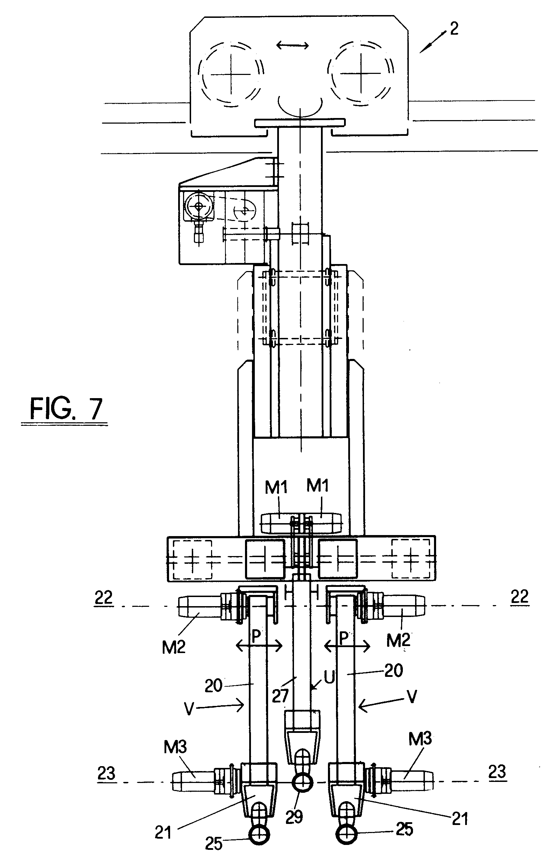

In Figs 4 and 7 each lower support element V is formed of two arms 20 and 21 which rotate about the axes 22,23, respectively according to the directions K and L under the control of the motors M2 and M3, respectively. At the free ends of the arms 21, three suction cups 24,25,26 are arranged which are orthogonally disposed to each other and can rotate in the directions M and N. The rotation in the direction M of the suction cups 24,25,26 is obtained by the motor M4 which rotates the arm 21 about the axis X and the rotation of the suction cups 24,25,26 in the direction N is obtained by the motor M5 which rotates the end of the arm 21 to which the three suction cups are disposed about the axis Y (Fig. 5). The movements in the direction M and N are intended to position one of the three suction cups 24,25,26 on the surfaces of the sanitary piece according to the strategical choice made by the controller. As can be seen from Fig. 7 each lower support element V can be horizontally positioned along the directions P under control of the motor M1.

The upper support element U of this embodiment is on the contrary formed of an arm 27 at the free end of which three orthogonal suction cups 28,29 and 30 are articulated. The arm 27 together with the suction cups 28,29,30 is rotated about the axis Z by the motor M6. The vertical movement of the arm 27 together with the suction cups 28,29,30 is obtained by the motor M7.

In this embodiment it is further to be noted the existence of a second working alternative area 31 represented by a fork 32 disposed in the side opposite to that where the above described supporting elements V and U operate. This fork 32 is normally provided in order to widen the use of the handling robotized system, however without cooperating with the delicated loading operation of the sanitary pieces in the furnace.

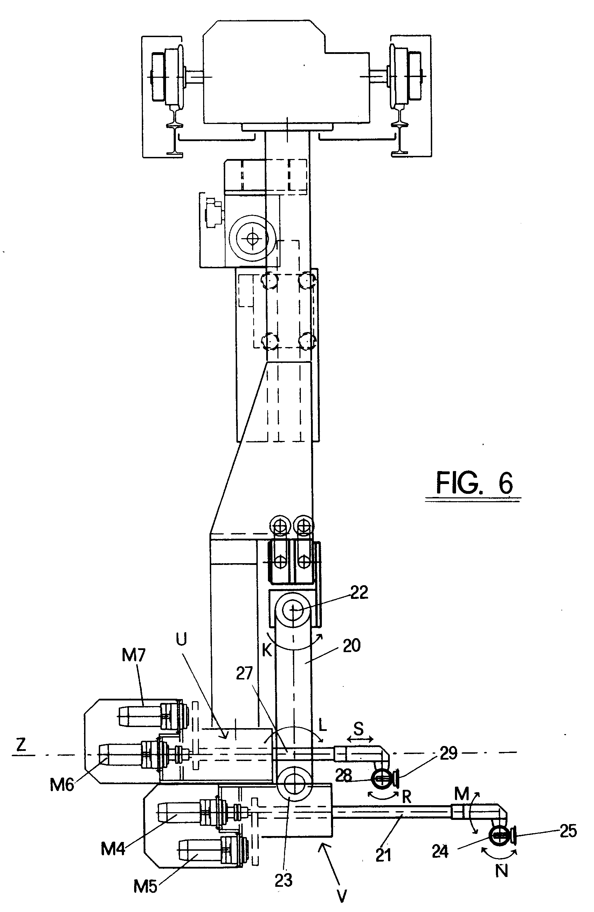

In Fig. 6 the upper support element U is disposed horizontally rather then vertically, as in Figs. 4,5 and 7.

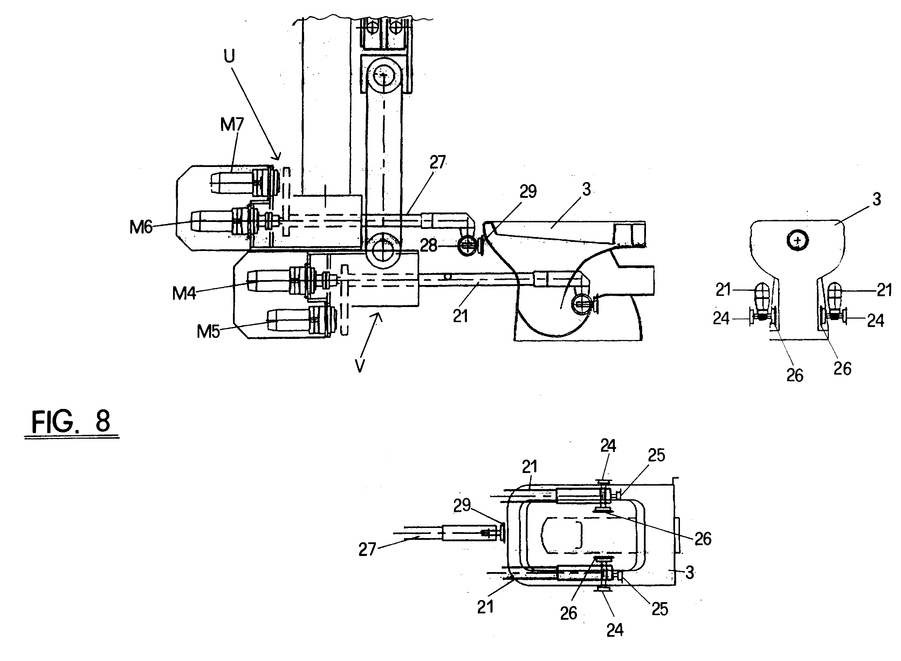

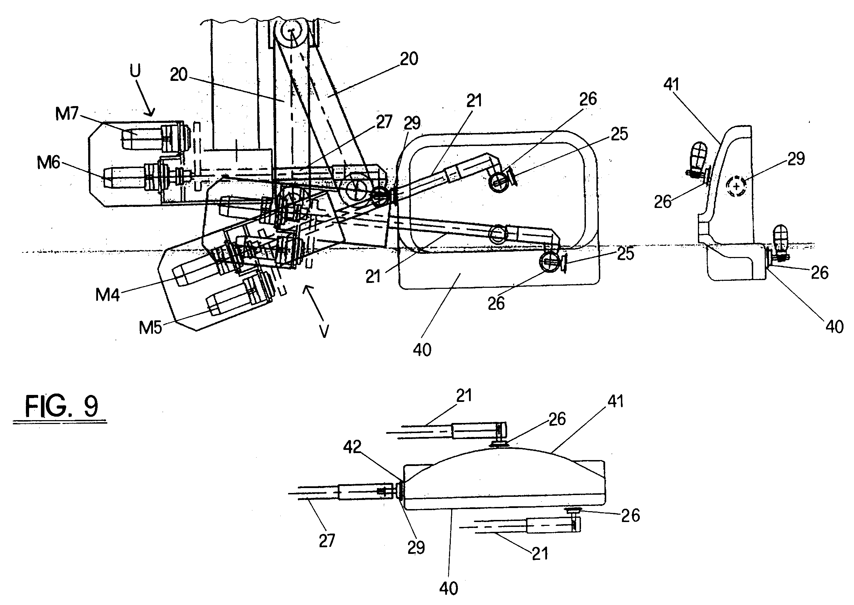

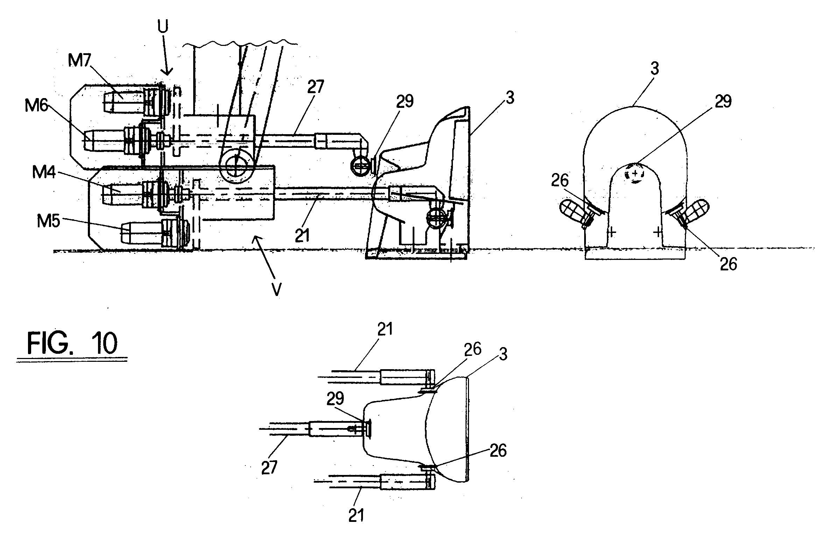

Figs. 8,9 and 10 diagrammatically show in a side view, a plan top view and a front view, respectively the manner in which the gripping of three different types of sanitary pieces occurs, in particular a water-closet (Fig. 8), a wash-basin (Fig. 9) and a bidet (Fig. 10).

As can be seen in Figure 8, the water-closet 3 is gripped by the suction cups 26 arranged at the end of the arm 21 of the lower supporting elements V in lower side positions, whereas the upper support element U is positioned so as to keep the water-closet 3 in a stabilized position by means of the suction cup 29 of the arm 27 which is applied to the front face of the water-closet.

As can be seen in Figure 9, the wash-basin 3 is gripped by the suction cup 26 of one arm 21 in its top surface 40 and by the suction cup 26 of the other arm 21 in its bottom surface 41, whereas the arm 27 is positioned so as to grip by means of its suction cup 29 the wash-basin 3 on one side surface 42.

As can be seen in Figure 10, the bidet 3 is gripped by the suction cup 26 of the arms 21 on opposite sides, whereas the arm 27 is positioned so as to grip by means of its suction cup 29 the bidet 3 on the bottom side.

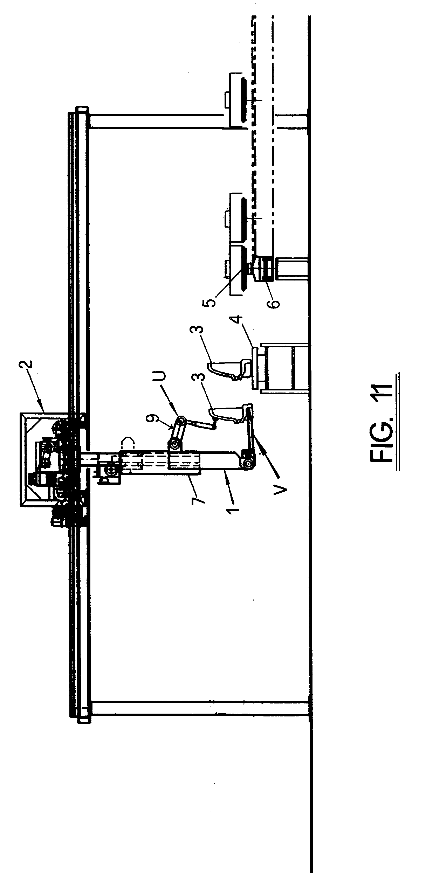

Finally, Fig. 11 shows a side view of a complete loading system of sanitary pieces in the baking furnace by means of an overanging robot moving along mutually perpendicular directions and provided with the gripping system 1 of Fig. 1. The grip of the sanitary piece 3 occurs by positioning the lower support elements V and the multiarticulated upper support element U on the basis of the data supplied by an integrated television system (not shown), capable of recognizing both the type and the position of the sanitary piece 3 with respect to the support plate 4 from which it is taken up. This is possible by exposing the sanitary piece 3 to the view field of the television system before the robot 2 takes up the sanitary pieces 3 so that the data relating to the recognition of the sanitary piece 3 can be sent to the controller of the robotized gripping system 1 and on the basis of which the path, the speed and the positions of each axis of the system are determined in order to be able to effect a predetermined and optimized gripping of the sanitary piece. As a matter of fact, it is suitable to point out that each sanitary piece 3 has predetermined gripping areas and therefore, once the type and the orientation of the sanitary piece 3 have been recognized, the controller of the robotized system (robot and gripping system) can process its control signals accordingly.

### OPERATION

The operation of the gripping system 1 according to the invention includes the possibility of using all the movements and freedom degrees in the system for obtaining the desired gripping of the sanitary piece to be handled according to its different dimensions and shapes.

The gripping of each different sanitary piece 3 necessarily requires three different gripping areas, in turn requiring a different positioning of the robotized gripping system 1.

This positioning occurs under control of the controller which receives instructions from the television system. The television system, which is incorporated in the gripping system 1 or operates separately, recognizes both the type and the position of the sanitary piece with respect to its holding table from which it is taken up and sends said data to the controller so that it can control all the movements of the gripping system.

Once the selection of the gripping areas on each sanitary piece has been made, the lower and upper support elements V and U of the gripping system 1 cooperate in order to assure a safe grip on the sanitary piece 3 without supporting it on its foot. The surface of this foot is deliberately left free for supporting the sanitary piece on the upper surface of the moving supports of the baking furnace.

Referring to Fig. 1 there is shown the arrangement of the support elements V and U intended to transport a wash-basin 3 to the baking furnace. In this case the wash-basin 3 is gripped by the free ends 9 of the lower arm 8 each engaging a cavity of the wash-basin and by the suction cup 17 of the multiarticulated upper support element U formed of the three links 11,12,13 which acts as a stabilizer for the sanitary piece.

Referring to Figs. 2 and 3, there is shown the arrangement of the support elements V and U intended to transport a bidet 3. The support of the bidet is effected by the pair of lower arms 8 which are disposed against the undercut surfaces of the bidet, whereas the upper multiarticulated support element U, by means of the suction cup 17, resists to the possible tilting forces of the sanitary piece given by its inertia during its movement; in other words it operates as a stabilizer during the sanitary piece transport.

In Figs. 8,9 and 10 there is shown a gripping system 1 intended to handle three different sanitary pieces, each of which is gripped on three different positions. The gripping system 1 in this case is provided with the pair of lower support elements V and the upper support element U each of which can move independently and is provided with suction cups arranged at the free ends thereof and grips the sanitary piece in a different gripping areas thereof. In this case the lower and upper support elements V and U operate independently from each other and are capable of gripping sanitary pieces of any geometrical shape, by taking into account the safe grip without using the foot surface of the sanitary piece.

It is to be noted in this example that the gripping system 1 selects the specific suction cup according to the shape of the sanitary piece.

From the foregoing it can be understood that the robotized gripping system according to the present invention attains all the predetermined objects and permits a quick and safe gripping of an infinite number of different sanitary pieces, each of which can be gripped in its optimal positions.

## Claims

1. Robotized gripping system for handling sanitary pieces, cooperating with a controller and an optoelectronic system for recognizing the sanitary pieces (3) as to the shape and dimension, characterized in that it comprises:
- upper and lower support means (U,V) to be positioned on predetermined areas of the sanitary piece;
- gripping means (17,24,25,26,28,29,30) disposed on the free end of at least one of said support means; and
- positioning means (M1,M2,M3,M4,M5,M6,M7) for positioning said support means together with said gripping means (17,24,25,26,28,29,30) in said predetermined areas of the sanitary piece (3),
- said positioning means (M1,M2,M3,M4,M5,M6,M7) being under the control of a controller which controls all the movements of said support means (U,V) and gripping means (17,24,25,26,28,29,30) in accordance with the shape and dimension of the sanitary piece (3) to be gripped.

2. Gripping system according to claim 1, characterized in that said lower support means (V) comprises a pair of articulated arms (8) having a free end (9) engaging the sanitary piece (3) and an opposite end connected to an axis (10) about which said articulated arms (8) rotate.

3. Gripping system according to claims 1 and 2, characteized in that said upper support means (U) is formed of a multiarticulated arm (11,12,13) provided at its free end with one gripping means (17).

4. Gripping system according to claim 3, characterized in that said multiarticulated arm is formed of three links (11,12,13), the free end of the link (13) being provided with said gripping means (17).

5. Gripping system according to claim 1, characterized in that said upper support means (U) is formed by an arm (27) provided at its lower end with gripping means (28,29,30), and said arm (27) being translatable along the direction (S) and rotatable in the direction (R) under control of motors (M6 and M7, respectively).

6. Gripping system according to claims 1 and 5, characterized in that said lower support means (V) are formed of a pair of articulated arms (20,21) which rotate about the axes (22,23, respectively) under control of motors (M2 and M3, respectively), said arm (21) being provided at its free end with three gripping means (24,25,26) arranged perpendicular to each other.

7. Gripping system according to claim 1, characterized in that all the gripping means (17,24,25,26, 28,29,30) are suction cups connected to a vacuum source.
